# EUROPÄISCHE PATENTSCHRIFT

(11) **EP 3 922 005 B1**
(45) Veröffentlichungstag und Bekanntmachung des Hinweises auf die Patenterteilung: **11.05.2022**
(21) Anmeldenummer: 20810924.9
(22) Anmeldetag: 19.11.2020
(51) Int. Cl.: H04N 5/232

(54) **VERFAHREN ZUM ERZEUGEN VON REPRODUZIERBAREN PERSPEKTIVEN VON FOTOGRAFIEN EINES OBJEKTS SOWIE MOBILES GERÄT MIT INTEGRIERTER KAMERA**
METHOD FOR GENERATING REPRODUCIBLE PERSPECTIVES OF PHOTOGRAPHS OF AN OBJECT, AND MOBILE DEVICE WITH AN INTEGRATED CAMERA
PROCÉDÉ DE GÉNÉRATION DE PERSPECTIVES REPRODUCTIBLES DE PHOTOGRAPHIES D'UN OBJET, ET DISPOSITIF MOBILE DOTÉ D'UNE CAMÉRA INTÉGRÉE

(30) Priorität: 22.01.2020 DE 102020101398
(43) Veröffentlichungstag der Anmeldung: 15.12.2021
(73) Patentinhaber: Audi AG, 85045 Ingolstadt (DE)
(72) Erfinder: FISCHER, Andreas, 80369 München (DE); SALCHER, Deborah, 80804 München (DE)
(86) Internationale Anmeldenummer: PCT/EP2020/082611
(87) Internationale Veröffentlichungsnummer: WO 2021/148163

(56) Entgegenhaltungen:
- EP-A1- 3 502 960
- WO-A1-2015/079231
- US-A1- 2016 034 590
- US-A1- 2019 098 205
- US-A1- 2019 312 985

## Beschreibung

Die Erfindung betrifft ein Verfahren, ein mobiles Gerät mit integrierter Kamera zum Erzeugen von reproduzierbaren Perspektiven von Fotografien eines Objekts.

Aus der EP 2 608 531 A2 ist eine kombinierte Normallicht- und Infrarotkamera bekannt, die auf Grundlage einer ersten Normallichtaufnahme einer Ansicht mit der Normallichtkamera oder einer anderen Kamera und den aktuellen Bilddaten einer weiteren Aufnahme der selben Ansicht zu einem späteren Zeitpunkt Hinweise zum Auffinden der ersten Aufnahmeposition der Ansicht ausgibt. Bei Erreichen der ersten Aufnahmeposition wird dabei eine zweite Aufnahme gemacht, um einen Vorher-Nachher-Effekt zu erzeugen.

Aus der US 2015/0139535 A1 ist ein Verfahren zum Erzeugen eines Objektbildausrichtungspakets bekannt. Zum Erzeugen des Objektbildausrichtungspakets wird zunächst ein 3D-Modell eines Objekts erzeugt. Um jeweilige Ansichten des 3D-Objekts mit Echtbildern zu kombinieren, wird aus vorbestimmten Richtungen jeweils eine 2D-Fotoaufnahme des Objekts gemacht. Zu dem 3D-Modell des Objekts werden Schnitte entsprechend den Perspektiven der jeweiligen 2D-Aufnahmen erzeugt. Die zu den jeweiligen 2D-Aufnahmen entsprechenden Schnitte des 3D-Modells werden anschließend überlagert und der Oberfläche des Schnittes entsprechend ausgerichtet. Zuletzt wird der Gegenstand mit der 2D-Bildüberlagerung freigestellt. Nachteilig bei dem bekannten Verfahren ist, dass die Perspektiven der jeweiligen 2D-Aufnahme zu dem Schnitt des 3D-Modells nicht immer übereinstimmen und beim Ausrichten der 2D-Aufnahme an die jeweilige Oberfläche des

Schnittes Verzerrungen entstehen können.

Das Dokument US 2019/098205 A1 offenbart ein Verfahren zum Erzeugen von reproduzierbaren Perspektiven von Fotografien eines Objekts gemäß dem Oberbegriff des Anspruchs 1.

Das Dokument US 2019/312985 A1 offenbart ein Verfahren zum Erzeugen von reproduzierbaren 2D Aufnahmen eines Objekts, bei welchem anhand einer abgespeicherten Referenzansicht ein Ausgangsstandort für eine erste 2D-Aufnahme des Objekts bestimmt wird, sowie ausgehend von dem Ausgangsstandort der Benutzer in die Perspektiven für weitere 2D-Aufnahmen mittels Augmented-Reality Marker mittels eines Augmented-Reality-Geräts geführt wird.

Das Dokument EP 3 502 960 A1 offenbart ein Verfahren zur Schadensdokumentation bei Leihfahrzeugen mittels eines mobilen Geräts und einem damit verbundenen Back-End-Server, wobei der Benutzer mittels Augmented-Reality-Markern, welche Pfeile, Kreise und Texthinweise beinhalten, zu der für eine 2D-Aufnahme relevanten Perspektive des Fahrzeugs zur Schadensdokumentation geführt wird.

Das Dokument WO 2015/079231 A1 offenbart ein Verfahren und eine Vorrichtung zum automatisierten Erzeugen von reproduzierbaren Fotografien eines Kraftfahrzeugs, wobei der Benutzer dafür mittels Augmented-Reality-Markern in die für die jeweilige 2D Aufnahme vorgesehene Perspektive geführt wird, indem die Augmented-Reality-Marker mit dem zu fotografierenden Kraftfahrzeug auf der Kameraanzeige an Ecken und Kanten des Kraftfahrzeugs angelehnt werden.

Das Dokument US 2016/034590 A1 offenbart ein Verfahren zum Erzeugen von reproduzierbaren Fotografien zum Verkauf eines Kraftfahrzeugs, wobei mittels einer Fahrzeugidentifikationsnummer zusätzlich noch Fahrzeugdaten aus einer Datenbank verwendet werden, um damit eine Verkaufsannonce für ein Kraftfahrzeug zu generieren. Dafür wird der Benutzer gemäß durch einen Fotografievorgang zum Erzeugen von reproduzierbaren 2D-Aufnahmen des zu verkaufenden Kraftfahrzeugs geführt. Der Benutzer wird mittels Augmented-Reality-Markern, welche als Rahmenelemente ausgestaltet sind, in die für die jeweilige 2D-Aufnahme erforderliche Perspektive geführt.

Der Erfindung liegt die Aufgabe zugrunde, reproduzierbare Fotografien eines Objekts in definierten Perspektiven zu erzeugen.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Unter dem Begriff Kamera wird in diesem Kontext eine in einem mobilen Gerät integrierte Kamera verstanden.

Durch die Erfindung ist ein Verfahren zum Erzeugen von reproduzierbaren von Fotografien in definierten Perspektiven eines Objekts bereitgestellt. Dabei wird eine erste 2D-Aufnahme einer vorgegebenen Referenzansicht eines Objekts mittels einer Kamera erfasst und von der ersten 2D-Aufnahme ausgehend ein Ausgangsstandort mittels eines Computer-Vision-Moduls ermittelt. Dabei werden ausgehend vom Ausgangsstandort eine oder mehrere vorgegebene und/oder einstellbare relative Positionen im Umfeld und am und/oder im Objekt als ein oder mehrere einzunehmende Standorte für die jeweilige Perspektive der Kamera für die Aufnahme mindestens einer zweiten 2D-Aufnahme bestimmt. Der jeweilige Standort wird in einer Objektansicht auf einer Anzeige der Kamera mittels eines jeweiligen ersten Augmented-Reality-Markers auf dem Fußboden und/oder am Objekt angezeigt. Mit anderen Worten, durch die Erfindung ist ein Verfahren bereitgestellt, das ermöglicht, ein Objekt aus vorbestimmten und gleichen Perspektiven jeweils reproduzierbar zu fotografieren. Dazu wird zunächst eine Referenzansicht eines Objekts mit einer Kamera erfasst. Handelt es sich bei dem Objekt beispielsweise um ein Kraftfahrzeug, so kann als Referenzansicht eine Ansicht auf das vordere Kennzeichen des Kraftfahrzeugs vorgegeben werden. Ein Computer-Vision-Modul erkennt mittels eines Bildverarbeitungsverfahrens die Umrisse und spezifischen Muster des Referenzobjekts und bestimmt daraus einen Ausgangsstandort, der auf dem Referenzobjekt positioniert sein kann. Von dem Ausgangsstandort aus werden die jeweiligen Standorte für die jeweiligen 2D-Aufnahmen als Relativposition bestimmt. Von dem Ausgangsstandort auf dem Referenzobjekt aus wird anschließend eine Entfernung der Kamera zum Ausgangsstandort, beispielsweise mittels Triangulation beim Autofokus und/oder Vergleich von Größenverhältnissen des Referenzobjekts in der Referenzansicht, berechnet. Anschließend wird dem Benutzer die relative Entfernung der Kamera zum Standort der ersten Perspektive mittels eines Augmented-Reality-Markers auf der Anzeige der Kamera angezeigt. Mittels Beschleunigungs- und Gyrosensoren wird ermittelt und überprüft, wie die Kamera ausgerichtet werden soll, damit an den jeweiligen Standorten die jeweiligen Perspektiven für die Fotoaufnahmen des Objekts erreicht werden. Das führt dazu, dass der Benutzer erkennen kann, welcher Standort jeweils für die jeweilige 2D-Aufnahme des Objekts in der jeweiligen Perspektive einzunehmen ist. Durch die Anzeige der Standorte mittels Augmented-Reality-Markern wird dem Benutzer eine Hilfe zur Verfügung gestellt, sodass er weiß, von welchem Standort aus er eine jeweilige 2D-Aufnahme des Objekts tätigen soll, damit das Objekt stets aus den gleichen Perspektiven reproduzierbar fotografiert wird. Die Erfindung hat dabei den Vorteil, dass eine gleichbleibende Qualität der Objektpräsentation unabhängig von einer fotografierenden Person sichergestellt werden kann. Ferner können die Perspektiven, aus denen das Objekt fotografiert werden soll, entsprechend dem Objekt von einem Benutzer und/oder mittels einer Voreinstellung angepasst werden.

Die hier beschriebenen Formen und Ausprägungen der Augmented-Reality-Marker sind beispielhaft zu verstehen und können auch andere Formen und Ausprägungen umfassen.

Zu der Erfindung gehören auch Ausführungsformen, durch die sich zusätzliche Vorteile ergeben.

Eine Ausführungsform sieht vor, dass dem Benutzer an einem oder mehreren Standorten ein oder mehrere Hilfselemente mittels zweiter Augmented-Reality-Marker in der Objektansicht auf der Anzeige der Kamera zum Ausrichten der Kamera auf die mindestens eine vorgegebene und/oder einstellbare Perspektive angezeigt werden. Mit anderen Worten, wenn der Benutzer mit der Kamera an einem Standort ankommt, von dem aus eine Perspektive auf das Objekt stimmt und eine Fotografie des Objekts aufgenommen werden soll, so ist die jeweilige Ausrichtung und Orientierung der Kamera entsprechend der Perspektive auszurichten. Dazu wird dem Benutzer eine Hilfestellung mittels der ein oder mehreren Hilfselemente gegeben, die auf der Anzeige im Rahmen von zweiten Augmented-Reality-Markern dem Benutzer angezeigt werden. Beispielsweise können diese Augmented-Reality-Marker ein oder mehrere Kreise darstellen, wobei einer der Kreise einen Punkt in der Mitte, analog zu einer Zielscheibe, aufweist. Dies gibt dem Benutzer den Eindruck, auf den Blickpunkt, auf den die Kamera für die jeweilige Perspektive vom dem jeweiligen Standort aus zeigen soll, zu zielen.

Zusätzlich kann mittels zumindest eines weiteren Kreises mit einem durchgehenden Querbalken, der zum Ausrichten des für die jeweilige Perspektive vorgesehenen Abstands in die Mitte des Kreises zu platzieren ist, als weiteres Hilfselement dazu genommen werden. Durch Drehen des Querbalkens um seinen Mittelpunkt kann dem Benutzer zusätzlich ein Feedback zur Rotation der Kamera gegeben werden. So kann beispielsweise der Querbalken bei Erreichen der für die jeweilige Perspektive vorgesehenen horizontalen Ausrichtung in der Mitte des Kreises beispielsweise waagrecht angeordnet werden, um dem Benutzer zu signalisieren, dass der für die jeweilige Perspektive vorgesehene Rotationswinkel der Kamera erreicht ist. Der Rotationswinkel kann dabei der mittels der Kamera intrinischen Gyro- und Beschleunigungssensoren ermittelt werden. Dadurch ergibt sich der Vorteil, dass dem Benutzer eine Hilfestellung gegeben wird, wie die Kamera an dem jeweiligen Standort der jeweiligen Perspektive ausgerichtet werden soll.

Dabei kann die Form der Hilfselemente als zweite Augmented-Reality-Marker nicht auf die Form eines Kreises mit/ohne Mittelpunkt und eines Querbalkens beschränkt sein.

Eine Ausführungsform sieht vor, dass das eine oder die mehreren Hilfselemente bei Erreichen der mindestens einen vorgegebenen und/oder einstellbaren Perspektive in einer Flucht angeordnet werden. Hierdurch ergibt sich der Vorteil, dass zum Erreichen der oben gesagten Perspektive die jeweiligen Hilfselemente derart in einer Flucht angeordnet werden, sodass der Benutzer den Eindruck erhält, auf die richtige Perspektive zu zielen. Beispielsweise mittels zumindest zweier Kreise, wobei ein Kreis einen Mittelpunkt zum Darstellen einer Zielscheibe aufweist. Ebenfalls kann bei Erreichen der für die jeweilige Perspektive vorgesehenen Rotation beispielsweise ein Querbalken in einer Flucht mit den Kreisen schwebend als weiteres Hilfselement dazu genommen werden. Durch Einschweben des Querbalkens in einem der Kreise kann beispielsweise dem Benutzer das Erreichen der für die jeweilige Perspektive vorgesehenen horizontalen Ausrichtung signalisiert werden. Ebenfalls kann beispielsweise dem Benutzer durch Drehen des Querbalkens um seinen Mittelpunkt in einem der Kreise zusätzlich ein Feedback zur Rotation der Kamera gegeben werden. Bei der Anordnung der Hilfselemente in einer Flucht wird dem Benutzer ebenfalls eine optische Rückmeldung gegeben, dass die richtige Ausrichtung der Kamera bezüglich zum Aufnehmen der Perspektive erreicht ist.

Im Folgenden wird beschrieben, wie das Fotografieren eines Objekts, wie beispielsweise ein Kraftfahrzeug, ablaufen kann.

Eine Ausführungsform sieht vor, dass die Kamera mittels des Computer-Vision-Moduls ein Referenzobjekt am Objekt in der Referenzansicht erkennt und mittels einer Kontur oder Muster des Referenzobjekts den Ausgangsstandort relativ zum Objekt ermittelt. Mit anderen Worten, die Referenzansicht kann eine beliebige Ansicht des Objekts sein, die ein Referenzobjekt, wie beispielsweise ein spezifisches Merkmal, enthält. Das spezifische Merkmal kann dabei eine mittels eines Computer-Vision-Verfahrens erkennbare Kontur oder Muster sein, beispielsweise das Kennzeichen eines Kraftfahrzeugs. Dieses spezifische Merkmal dient dabei als Referenzobjekt, auf das der Ursprung eines Koordinatensystems der Kamera als Ausgangsstandort für die Bestimmung der einzunehmenden Standorte und der Perspektiven relativ zum Ausgangsstandort gesetzt wird. Das Referenzobjekt wird hierbei durch eine künstliche Intelligenz in Echtzeit erkannt.

Anhand der gefundenen Position des Referenzobjekts im Koordinatensystem wird eine Entfernung der Kamera zu dem Referenzobjekt am Objekt gemessen. Auf das Referenzobjekt wird dabei der Ursprung des Koordinatensystems für die Kamera als Ausgangsstandort gesetzt, von dem aus alle weiteren Standorte als relative Position bezüglich zum Ursprung als Ausgangsstandort berechnet werden. Wenn das Objekt ein Kraftfahrzeug ist, kann der Ausgangsstandort beispielsweise in die Mitte des vorderen Kennzeichens gesetzt werden. Aus der nun bekannten Entfernung der Kamera zum Ausgangsstandort kann die relative Distanz der Kamera zum ersten Standort für die erste Perspektive ermittelt werden. Hierdurch ergibt sich der Vorteil, dass die Perspektiven ausschließlich vom Objekt abhängig sind. Da zu einem jeweiligen Objekt die jeweiligen Standorte als relative Position ausgehend von den jeweiligen Ausgangsstandort auf dem Referenzobjekt des Objekts bestimmt werden, wird dabei eine gleichbleibende Qualität der 2D-Aaufnahmen gewährleistet. Ferner sind die 2D-Aufnahmen zu verschiedenen Objekten der gleichen Art, beispielsweise verschiedene Modelle des gleichen Kraftfahrzeugs, reproduzierbar.

Eine Ausführungsform sieht vor, dass die Kamera mittels zumindest eines Beschleunigungs- und/oder Gyro-Sensors ihre aktuelle relative Position und Orientierung relativ zum Ausgangsstandort ermittelt. Mit anderen Worten, sobald der Ausgangsstandort über das Computer-Vision-Modul bestimmt wurde, wird nun die Bewegung der Kamera zwischen den jeweiligen Standorten für die 2D-Aufnahmen in der jeweiligen Perspektive mittels zumindest eines Beschleunigungs- und/oder Gyrosensors und Triangulation verfolgt. Hierdurch ergibt sich der Vorteil, dass bei einem Standortwechsel von verschiedenen Seiten des Objekts keine erneute Referenzaufnahme für eine Kalibrierung der Kamera notwendig ist.

Eine Ausführungsform sieht vor, dass das Objekt ein Kraftfahrzeug ist. Hierdurch ergibt sich der Vorteil, dass bei einem Kraftfahrzeug das jeweilige Referenzobjekt, beispielsweise ein Kennzeichen, eindeutig bestimmt sein kann. Ferner können verschiedene Modelle eines Kraftfahrzeugs in gleichbleibender Qualität und reproduzierbar fotografiert werden. Außerdem kann das Verfahren in besagter Ausführungsform auch auf 2D-Aufnahmen des Innenraums des Kraftfahrzeugs erweitert werden.

Eine Ausführungsform sieht vor, dass das Referenzobjekt ein Kennzeichen des Kraftfahrzeugs ist. Mit anderen Worten, als Referenzobjekt zur Bestimmung der Ausgangsposition der Kamera kann ein Kennzeichen des Kraftfahrzeugs verwendet werden. Da es bereits bestehende Verfahren zur automatischen Kennzeichenerkennung von Kraftfahrzeugen gibt, ergibt sich der Vorteil, dass dabei auf bestehende Verfahren zurückgegriffen werden und mit hinreichender Genauigkeit ein Ausgangsstandort bestimmt werden kann, von dem aus alle weiteren Standorte für die jeweiligen Perspektiven relativ zum Kraftfahrzeug berechnet werden können. Hierdurch werden die jeweiligen Standorte bei verschiedenen Kraftfahrzeugen mit den gleichen Maßen an den gleichen Koordinaten gesetzt, sodass eine gleichbleibende Qualität der 2D-Aufnahmen reproduzierbar sichergestellt werden kann.

Eine Ausführungsform sieht vor, dass zur Bestimmung der einen oder mehreren Standorte für die jeweilige Perspektive der Kamera die Maße des Objekts berücksichtigt werden. Mit anderen Worten, es gibt einen Unterschied, ob beispielsweise das Kraftfahrzeug ein großer Geländewagen oder ein Kleinwagen ist. Hierdurch ergeben sich relative Verschiebungen in der jeweiligen Dimension. So ist beispielsweise die Perspektive, die in der Seitenansicht auf eine Hintertür eines Geländewagens ausgerichtet ist, schon außerhalb der Ansicht eines Kleinwagens, sodass der Standort für die Perspektive die Seitenansicht der Hintertür für den Kleinwagen weiter nach vorne verschoben werden muss. In solch einem Extremfall können die Perspektiven der 2D-Aufnahmen an die Dimension des jeweiligen Objekts angepasst werden. Hierdurch ergibt sich der Vorteil, dass das Verfahren für ein oder mehrere verschiedene Objekte 2D-Aufnahmen der jeweiligen Perspektiven in gleichbleibender Qualität reproduzieren kann.

Eine Ausführungsform sieht vor, dass eine Anzahl oder Menge an vorgegebenen Perspektiven sowohl Perspektiven im Umfeld des Objekts als auch Perspektiven im Innenraum des Objekts umfasst. Mit anderen Worten, ein Objekt kann von Standorten um das Objekt herum fotografiert werden. Zusätzlich kann ein Objekt, wenn es von innen begehbar ist, wie beispielsweise ein Kraftfahrzeug mit einem Innenraum, auch der Innenraum des Objekts aus den jeweiligen dafür vorgesehenen Perspektiven analog fotografiert werden. Dazu werden die jeweiligen Standorte im Innenraum ebenfalls ausgehend vom Ausgangsstandort dem Benutzer entsprechend angezeigt. Zusätzlich kann für einen Übergang von einem Standort im Umfeld des Kraftfahrzeugs zu einem Standort im Innenraum des Kraftfahrzeugs dem Benutzer ein Hinweis angezeigt werden, beispielsweise eine Tür zu öffnen und/oder sich auf einen bestimmten Sitz, wie beispielsweise dem Mittelsitz auf einer Rückbank, zu begeben, angezeigt werden. Hierdurch ergibt sich der Vorteil, dass das Verfahren nicht allein auf eine Außenansicht des Objekts beschränkt ist.

Eine Ausführungsform sieht vor, dass vom Objekt mittels eines 3D-Modells des Objekts im Außenbereich des Objekts durch Überdeckung mittels einer Maske automatisch freigestellte Bilder und/oder Composings erzeugt werden können. Mit anderen Worten, durch den Einsatz von 3D-Modellen des Fahrzeugs kann im Außenbereich durch Überdeckung eine Maske und automatisch freigestellte Bilder beziehungsweise Composings, beispielsweise mit einem Schatten oder einem anderem Hintergrund, erzeugt werden. Die Überlagerung der 2D-Aufnahmen eines Kraftfahrzeugs mit dem entsprechenden 3D-Modell des Kraftfahrzeugs erfolgt bei der 2D-Aufnahme der Referenzansicht mit dem Referenzobjekt. Ausgehend von der Referenzansicht weist das 3D-Modell entsprechende Silhouetten entsprechend der jeweiligen Perspektive auf. Durch Überlagerung der jeweiligen 2D-Aufnahme aus einer Perspektive mit der jeweiligen 3D-Modell-Silhouette kann eine Maske erzeugt werden. Das heißt, dass das Kraftfahrzeug aus dem Hintergrund ausgeschnitten werden kann.

Mit dem freigestellten Bild beziehungsweise Composing können ebenfalls Schatten entsprechend der Perspektive und eines simulierten Lichteinfalls erzeugt werden. Dadurch ergibt sich der Vorteil, dass das Kraftfahrzeug entsprechend unabhängig vom Hintergrund fotografiert werden kann. Durch das Erzeugen von Composings, beispielsweise mit Schatten oder einem anderen Hintergrund oder ähnlichem, ergibt sich der Vorteil, dass eine gleichbleibende Qualität unabhängig vom Fotografieort vom Kraftfahrzeug erzeugt werden kann. Des Weiteren ergibt sich der Vorteil, dass mittels Überblendung, beispielsweise des Kennzeichens, die Bilder entsprechend verkaufsfertig vorbereitet werden können.

Eine Ausführungsform sieht vor, dass das 3D-Modell von dem Benutzer ausgewählt wird. Hierdurch ergibt sich der Vorteil, dass das 3D-Modell zu dem Objekt, das fotografiert werden soll, passt. Beispielsweise kann dies ein bestimmtes Modell eines Kraftfahrzeugs sein. Wenn beispielsweise der Benutzer ein spezifisches Kraftfahrzeugmodell für einen Verkauf fotografieren möchte, so wird der entsprechende Modelltyp in einem Menü vorausgewählt, sodass das 3D-Modell aus einem Speicher der Kamera und/oder einer Servereinheit bezogen werden kann. Das 3D-Modell enthält ferner auch die Maße des entsprechenden Kraftfahrzeugmodells. Hierdurch ergibt sich der Vorteil, dass das Verfahren auf verschiedene Objekte reproduzierbar in gleichbleibender Qualität anwendbar ist.

Eine Ausführungsform sieht vor, dass ein Schatten mittels des 3D-Modells berechnet und in die zumindest eine 2D-Aufnahme eingefügt werden kann. Mit anderen Worten, das Objekt wird in einer 2D-Aufnahme erkannt und mit einem dem Objekt entsprechenden 3D-Modell überlagert. Dabei erfolgt die Überlagerung des 3D-Modells in der entsprechenden Silhouette aus der Perspektive der 2D-Aufnahme. Durch die Überlagerung der jeweiligen 2D-Aufnahme mit der jeweiligen Silhouette des 3D-Modells des Objekts kann die 2D-Aufnahme aus dem Hintergrund ausgeschnitten werden. Zusätzlich oder alternativ kann mittels des 3D-Modells ein Schatten bezüglich einer virtuellen Lichtquelle simuliert und erzeugt werden. Dieser Schatten kann anschließend in die 2D-Aufnahme eingefügt werden. Hierdurch ergibt sich der Vorteil, dass die Fotografie aus der gewünschten Perspektive unabhängig von den eigentlichen Lichtverhältnissen reproduzierbar erfolgen kann.

Eine Ausführungsform sieht vor, dass die zweite 2D-Aufnahme des Objekts mittels Überblendungen oder Freistellungen modifiziert werden kann. Mit anderen Worten, das Objekt kann durch die Verwendung des 3D-Modells und der Überlagerung des in der 2D-Aufnahme erkannten Objekts mit dem jeweiligen 3D-Modell des Objekts aus dem Hintergrund ausgeschnitten werden. Außerdem können bestimmte Merkmale des Objekts, wie beispielsweise das Kennzeichen eines Kraftfahrzeugs, überblendet werden. Hierdurch ergibt sich der Vorteil, dass die 2D-Aufnahmen automatisch anonymisiert und damit auch datenschutzrechtliche Aspekte automatisch umgesetzt werden können. Außerdem ergibt sich hierdurch der Vorteil, dass das Objekt vom Hintergrund freigestellt und deshalb vom Hintergrund unabhängig fotografiert werden kann. Ferner ergibt sich hierdurch der Vorteil, dass 2D-Aufnahmen unabhängig des Hintergrunds in gleichbleibender Qualität unabhängig vom Fotografieort gemacht werden können.

Eine Ausführungsform sieht vor, dass das Verfahren von einem mobilen Gerät mit integrierter Kamera umgesetzt wird. Hierdurch ergibt sich der Vorteil, dass das Verfahren von einem Smartphone mit einer entsprechend ausgerüsteten Kamera umgesetzt werden kann. Ferner kann die Datenverbindung mittels einer Netzwerkverbindung des Smartphones erfolgen. Ferner ergibt sich hierdurch der Vorteil, dass die entsprechende Beschleunigungs- und Gyrosensorik des mobilen Gerätes für die Standortbestimmung relativ zum Objekt verwendet werden kann.

Die Erfindung umfasst auch die Kombinationen der Merkmale der beschriebenen Ausführungsformen gemäß den beigefügten Ansprüchen.

Im Folgenden sind Ausführungsbeispiele der Erfindung beschrieben. Hierzu zeigt:
- Fig. 1: eine schematische Darstellung eines zu fotografierenden Objekts in Form eines Kraftfahrzeugs sowie Standpunkte, wobei zu dem jeweiligen Standpunkt eine Perspektive einer 2DAufnahme zugeordnet ist, von welcher aus das Objekt fotografiert werden soll,
- Fig. 2: eine Ansicht des Objekts mit den entsprechenden AugmentedReality-Markern für die Standortmarkierung auf einem Anzeigebildschirm einer Kamera,
- Fig. 3: eine Skizze einer ersten Referenzansicht des Objekts zur Standortbestimmung und Kalibrierung,
- Fig. 4: eine Skizze von Augmented-Reality-Markern zur Standortbestimmung und zur Kameraorientierung,
- Fig. 5: eine Skizze von entsprechenden zweiten Augmented-Reality-Markern als Hilfselemente zur Ausrichtung der Kamera, und
- Fig. 6: einer solchen Darstellung entsprechende Freistellung des fotografierten Objekts bezüglich eines neutralen Hintergrunds und eines simulierten Schattens.

Bei dem im Folgenden erläuterten Ausführungsbeispiel handelt es sich um bevorzugte Ausführungsformen der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung gemäß den beigefügten Ansprüchen anzusehen sind. Des Weiteren ist die beschriebene Ausführungsform auch durch weitere der bereits beschriebenen Merkmale der Erfindung ergänzbar.

In den Figuren bezeichnen gleiche Bezugszeichen jeweils funktionsgleiche Elemente.

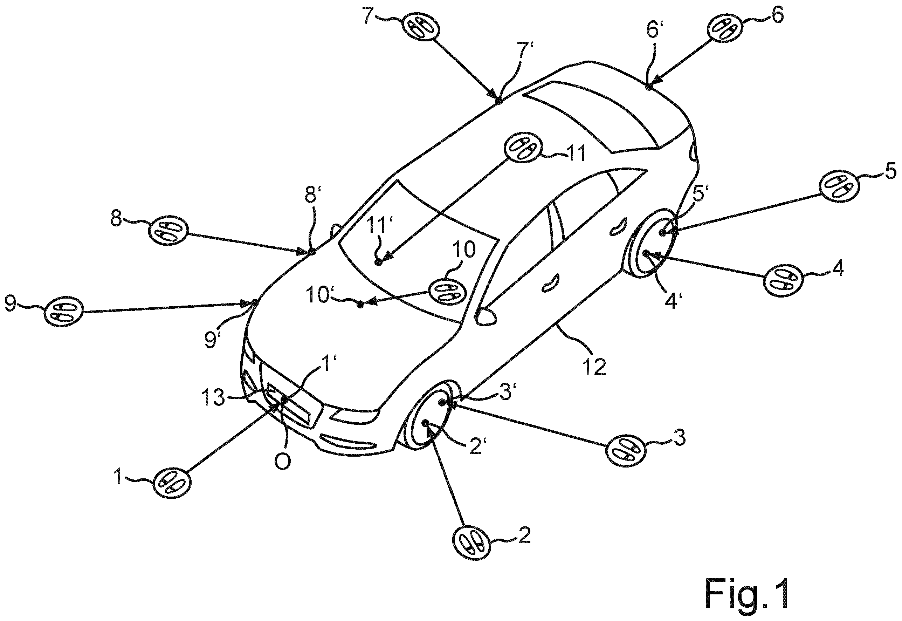

Fig. 1 zeigt ein zu fotografierendes Objekt als ein Kraftfahrzeug 12. Dem Beispiel kann folgende beispielhafte Situation zugrunde liegen: Ausgehend von einer Referenzansicht mit einem Referenzobjekt, das beispielsweise die Mitte des vorderen Kennzeichens 13 des Kraftfahrzeugs 12 sein kann, wird ein Ursprung O des Koordinatensystems der Kamera als Ausgangsstandort bestimmt. Relativ zum Ursprung O werden alle Standorte 1 bis 11' mit ihren jeweiligen Perspektiven 1' bis 11'bestimmt. Die Perspektiven können dabei derart definiert sein, dass der Benutzer an dem jeweiligen Standort 1 bis 11 mit dem Objektiv der Kamera auf einen für die jeweilige Perspektive 1' bis 11' vorgesehenen Punkt auf dem Objekt in einem bestimmten Neigungswinkel zeigt. Dies kann mittels einer Beschleunigungs- und Gyrosensorik der Kamera ermittelt werden. Der Benutzer fotografiert beispielsweise am Anfang mittels einer angezeigten Anweisung auf der Anzeige der Kamera die Front des Kraftfahrzeugs 12 mit dem Kennzeichen 13 als Referenzobjekt. Ausgehend von einer automatisierten Bilderkennung mittels eines Computer-Vision-Moduls wird eine Referenzansicht des Kraftfahrzeugs 12 in Form des Kennzeichens 13 erkannt. Die Kamera definiert nun beispielsweise die Mitte des Kennzeichens 13 als Ursprung O ihres Koordinatensystems als Ausgangsstandort zur Standortbestimmung.

Ferner kann mittels des Computer-Vision-Moduls erkannt werden, in welcher Distanz sich die Kamera zum Ursprung O auf dem Kennzeichen 13 befindet. Dies kann anhand der Größenverhältnisse in der 2D-Aufnahme ermittelt werden. Anschließend wird die relative Position vom aktuellen Standort der Kamera und dem Standort 1 bestimmt und dem Benutzer mittels eines Augmented-Reality-Markers, der auf dem Fußboden angezeigt wird, angezeigt. Fig. 1 zeigt um das Kraftfahrzeug 12 herum die Standorte 1 bis 11 mit ihren jeweiligen Perspektivansichten, die als Punkte, auf die das Objektiv der Kamera zeigen soll, dargestellt sind. Die Punkte 1' bis 11', auf die das Objektiv der Kamera ausgehende vom jeweiligen Standort 1 bis 11 zeigen soll, werden im Folgenden als die Perspektiven 1' bis 11' bezeichnet. Dabei wird einerseits zwischen den Standpunkten 1 bis 9 im Außenbereich des Kraftfahrzeugs 12 und zwischen den Standpunkten 10 bis 11 im Innenraum des Kraftfahrzeugs unterschieden.

Nach der 2D-Aufnahme der Referenzansicht mit besagter Standortbestimmung wird der Benutzer veranlasst, sich zum Standort 1 zu bewegen und die Kamera auf die erste Perspektive 1' auszurichten. Die ersten Augmented-Reality-Marker können dabei beispielsweise Kreise mit eingeschlossenen Fußabdrücken sein. Diese Zeigen dem Benutzer an, wie er sich an dem jeweiligen Standort 1 bis 11 hinzustellen hat, sodass er automatisch bereits in die für den Standort jeweilige Perspektive schaut. Für das Ausrichten der Kamera an dem jeweiligen Standort 1 bis 11 auf die jeweilige Perspektive 1' bis 11'werden Hilfselemente verwendet, die bei Erreichen der Perspektive 1' bis 11' in einer Flucht angeordnet werden. Damit hat der Benutzer beim Ausrichten der Kamer auf die Perspektive 1', wenn der Benutzer sich am Standort 1 befindet, den Eindruck, er ziele auf den Punkt 1' zum Erreichen der Perspektive 1'. Dabei kann die Aufnahme der 2D-Aufnahme bei Erreichen der Perspektive 1' automatisch erfolgen, sobald sich die entsprechenden Hilfselementen in einer Flucht angeordnet haben.

Wenn die 2D-Aufnahme zur Perspektive 1' am Standort 1 getätigt wurde, kann dem Benutzer der Standort 2 mittels des ersten Augmented-Reality-Markers auf der Anzeige der Kamera angezeigt werden. Beispielsweise kann dies bereits in Form eines Kreises mit einem grafischen oder schriftlichen Inhalt erfolgen, der beim Erreichen des Standortes zwei Fußabdrücke anzeigt, um dem Benutzer zu signalisieren, wie er sich für die Perspektive 2' am Standort 2 hinzustellen hat. Diese Anzeige des Standortes 2 wird mit dem Hinweis verbunden, dass sich der Benutzer zu dem Standort 2 bewegen solle. Sobald der Benutzer auf dem Standort 2 angekommen ist, muss er die Kamera entsprechend der Perspektive 2' ausrichten. Dies wird durch Anzeigen von zumindest einem Hilfselement realisiert. Sobald die Ausrichtung der Kamera auf die Perspektive 2' erfolgt, werden dazu die Hilfselemente in einer Flucht angeordnet und die zweite 2D-Aufnahme in der Perspektive 2' vom Standort 1 gemacht. Dieser Vorgang wiederholt sich für die Standorte 3 bis 9 im Außenbereich des Kraftfahrzeugs 12, wobei die Standorte 1 bis 9 jeweils mit den ersten Augmented-Reality-Markern auf dem Boden 18 im Umfeld des Kraftfahrzeugs 12 angezeigt werden.

Sobald der Standort 10 erreicht worden ist, der sich auf dem Fahrersitz des Kraftfahrzeugs 12 befindet, kann dem Benutzer beispielsweise mittels eines Texthinweises auf der Anzeige der Kamera angezeigt werden, zunächst die Fahrertür des Kraftfahrzeugs 12 zu öffnen und sich in den Innenraum des Kraftfahrzeugs 12 an dem bestimmten Punkt 10 zu begeben. Anschließend erfolgt die Anweisung zum Hingehen an den Standort 10 und zum Ausrichten der Kamera auf die Perspektive 10' analog zu den Perspektiven im Außenraum. Dabei werden die Standorte 10 bis 11 mit den ersten Augmented-Reality-Markern jeweils auf dem dafür vorgesehenen Sitzflächen und/oder dem Kraftfahrzeugboden angezeigt.

Die jeweiligen Ausgangsstandorte sind dabei vorgegeben entsprechend der Maße des Kraftfahrzeugs 12. So kann es beispielsweise einen Unterschied machen, ob in der Perspektive am Standort 5 von schräg hinten das Kraftfahrzeug 12 ein großes Kraftfahrzeug ist oder ein Kleinwagen. Im Extremfall kann dies bedeuten, dass für den Fall, dass der Benutzer bei Verwenden der Maße eines großen Geländewagens einen Kleinwagen fotografiert, der Benutzer an dem Kraftfahrzeug vorbei fotografieren wird können. Deshalb können die Maße des Objekts bei der Standortbestimmung berücksichtigt werden. Dies erfolgt durch eine vorherige Auswahl des jeweiligen Kraftfahrzeugmodells, das die entsprechenden Maße beinhaltet. Ausgehend von den entsprechenden Maßen werden nun die vorherbestimmten Standorte ausgehend vom Ursprung O als Ausgangsstandort von der Kamera berechnet und dem Benutzer auf einer Anzeige mittels der ersten Augmented-Reality-Marker auf dem Boden 18 angezeigt.

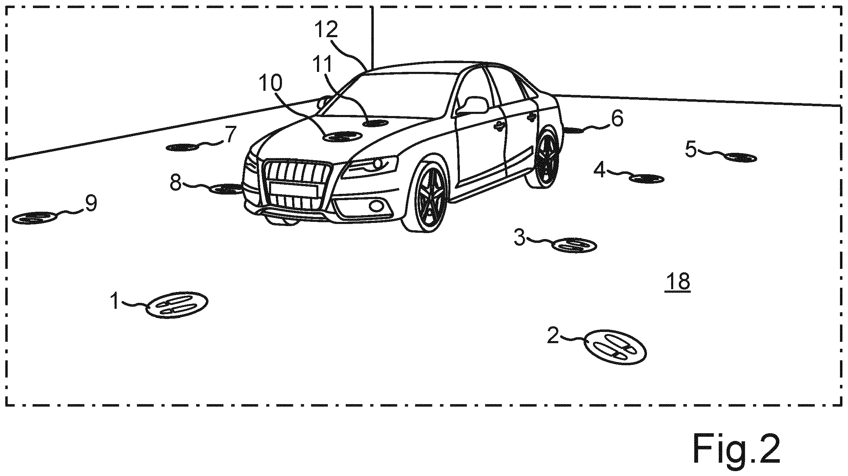

Fig. 2 zeigt eine beispielhafte mögliche Darstellung der Standorte 1 bis 11 auf einem Kameraanzeigebildschirm bezüglich zum Kraftfahrzeug 12. Dabei werden die Standorte 1 bis 11 mittels eines ersten Augmented-Reality-Markers markiert, der bereits Fußabdrücke zur Darstellung der Blickrichtung beinhaltet. Daraufhin muss der Benutzer nur noch die Kamera entsprechend der richtigen Drehung und dem Gierwinkel ausrichten. Dies ist beispielsweise eine erste Unterstützung des Benutzers bei der Positionierung der Kamera zum Erreichen der gewünschten, dem jeweiligen Standort entsprechenden Perspektive. Der Zielpunkt der Perspektive wird dabei dem Benutzer zweiter Augmented-Reality-Marker als Hilfselemente auf der Kameraanzeige angezeigt. Das Verfahren ist so konzipiert, dass der Benutzer zunächst die Front des Kraftfahrzeugs mit dem Kennzeichen 13 fotografiert. Wichtig bei dem Verfahren ist dabei die Kennzeichenerkennung des Kennzeichens 13 des Kraftfahrzeugs 12. Dies kann beispielhaft von vorne vom Kraftfahrzeug 12 erfolgen oder von hinten.

Sobald ein erster Ausgangsstandort definiert wurde, können die übrigen Standorte 2 bis 11 entsprechend ihrer relativen Position zum Ausgangsstandort 11 bezüglich auf den Ursprung O als Ausgangsstandort, der auf das Kennzeichen 13 gesetzt wird, bestimmt werden. Die Standortveränderung kann, sobald der Ursprung O auf dem Kennzeichen 13 definiert wurde, als Ausgangsstandort mittels der Beschleunigungs- und Gyrosensorik der Kamera, beispielsweise derer eines Smartphones, bestimmt werden. Dadurch kann die Kamera auch erkennen, wenn der Benutzer den entsprechenden Standort 1 bis 11 erreicht hat. Zusätzlich wird die entsprechende Kamera- und Gyrosensorik verwendet, um die vorgesehene Perspektive 1' bis 11' an dem jeweiligen Standort zu erreichen, sodass die Ausrichtung der Kamera auf die jeweilige Perspektive 1' bis 11' gleichbleibend erfolgt.

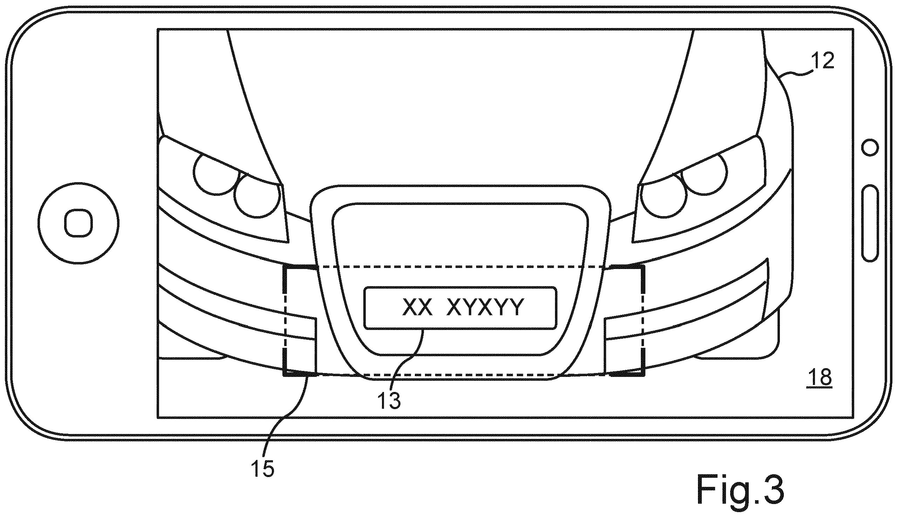

Fig. 3 zeigt beispielhaft eine Referenzansicht bezogen auf das Kraftfahrzeug 12 zur Bestimmung des Ursprungs O als Ausgangsstandort. Zur Bestimmung des Ursprungs O wird ein Referenzobjekt auf dem Objekt 12 erkannt. Dies ist hier beispielsweise das Kennzeichen 13. Mit bestehenden Verfahren der Bilderkennung kann das Kennzeichen 13 erkannt und mittels der Daten aus dem Autofokus der Kamera und/oder den abgespeicherten Maßen des Kennzeichens 13 im Vergleich zu der zum Kennzeichen 13 abgespeicherten Kontur eine Distanzbestimmung der Kamera zum Kennzeichen 13 vorgenommen werden. Zunächst wird dem Benutzer z.B. in Form einer Textanweisung 14 angezeigt, wo er sich zur 2D-Aufnahme der ersten Referenzaufnahme hinbegeben soll. Dies ist beispielsweise der Hinweis, dass der Benutzer sich vor das Kraftfahrzeug 12 stellen und das Kennzeichen 13 innerhalb des Rahmens 15 aufnehmen soll.

Der Rahmen 15 stellt dabei einen zu untersuchenden Bereich auf dem Objekt 12 dar. Mittels des erkannten Kennzeichens innerhalb des Rahmens 15 und des Kennzeichens 13 auf dem Kraftfahrzeug 12 wird dabei eine Distanz über die hinterlegte Dimension des Kennzeichens 13 ermittelt. Dies kann beispielsweise mittels der bekannten und hinterlegten Dimensionen des Kennzeichens 13 und eines Triangulationsverfahrens im Rahmen des Autofokus der Kamera erfolgen. Aus diesem Verfahren wird eine erste Distanz der Kamera von dem Kennzeichen 13 des Kraftfahrzeugs ermittelt.

Anschließend wird nun der Ursprung O eines genutzten Kamerakoordinatensystems in die Mitte des Kennzeichens 13 gesetzt. Relativ zum Ursprung O als Ausgangsstandort in der Mitte des Kennzeichens 13 werden nun analog zu Fig. 1 die Standorte 1 bis 11 mit ihren jeweiligen Perspektiven 1' bis 11' ermittelt und die Differenz der Relativposition der Kamera bezüglich des Ursprungs O und der Relativposition der Standorte 1 bis 11' dem Benutzer auf der Anzeige der Kamera mittels erster Augmented-Reality-Marker auf dem Boden 18 angezeigt. Dies ist beispielsweise der Fall, da sich der Benutzer im Gegensatz zur Textanweisung 14 weniger als einen Meter von dem Kennzeichen des Kraftfahrzeugs 12 entfernt oder auch weiter weg aufhalten kann. Dies ist schwer abschätzbar, sodass eine Distanzerkennung der Kamera vom Kennzeichen 13 erforderlich ist zur Bestimmung der Relativposition der Kamera zum Ursprung O und zu den Standorten 1 bis 11. Dies ermöglicht, dass 2D-Aufnahmen in gleichbleibender Qualität aus der jeweils gleichen Perspektive 1' bis 11' gemacht werden können. Die ersten Augmented-Reality-Marker zur Standortbestimmung der Standorte 1 bis 11 werden dem Benutzer dabei jeweils auf dem Boden 18 angezeigt.

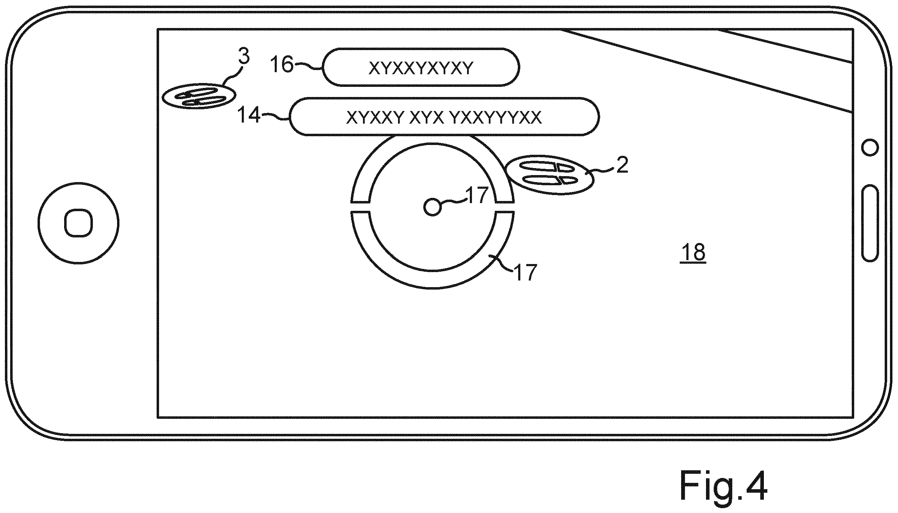

Fig. 4 zeigt die Anzeige von zwei verschiedenen zweiten Augmented-Reality-Markern als Hilfselemente zur Ausrichtung der Kamera auf die jeweilige Perspektive 1' bis 11'. Für eine 2D-Aufnahme aus der beispielsweise dafür vorgesehenen Perspektive 2' am Standort 2 wird dem Benutzer mittels des ersten Augmented-Reality-Markers angezeigt, sich zum Standort 2 zu begeben. Dabei kann der erste Augmented-Reality-Marker ein Kreis sein, der Fußabdrücke enthält, die dem Benutzer die Stehrichtung vorgeben, sodass er mit dem Oberkörper in Richtung der Perspektive 2' schaut. Dies kann beispielsweise mittels eines roten Kreises mit weißen eingeprägten Fußabdrücken angezeigt werden. Ferner kann beispielsweise vorgesehen sein, dass der nächste Standort 3 mittels eines ersten Augmented-Reality-Markers in Form eines transparenten Kreises angezeigt wird. Dabei kann der transparente Kreis am Standort 3 auch weitere Elemente beinhalten, wie beispielsweise ein Markenlogo.

Zum Ausrichten der Kamera auf die jeweilige Perspektive 2' am Standort 2 kann dabei der zweite Augmented-Reality-Marker als Hilfselement in Form eines Kreises mit Mittelpunkt 17 angezeigt werden. Zur Einordnung des Benutzers, welche Perspektivaufnahme gerade erfolgt, wird dem Benutzer z.B. ein Texthinweis 16 angezeigt. Der Texthinweis 16 kann dabei eine Information wie beispielsweise: "Photo 2 of 12", beinhalten (Foto 2 von 12). Der Hinweis, sich zum nächsten Standort 1 bis 11 zu begeben, wird auch in Form einer Textanweisung 14 dem Benutzer auf der Anzeige angezeigt. Die Textanweisung 14 kann dabei eine Anweisung wie beispielsweise: "Go to the front driver side position", beinhalten ("Gehen sie zu der vorderen Fahrerseitenposition"). Sobald der Benutzer den Standort 2 erreicht hat, wird zu dem Kreis mit Mittelpunkt 17 zusätzlich ein weiterer Kreis zur richtigen Ausrichtung der Kamera auf die Perspektive 2' angezeigt.

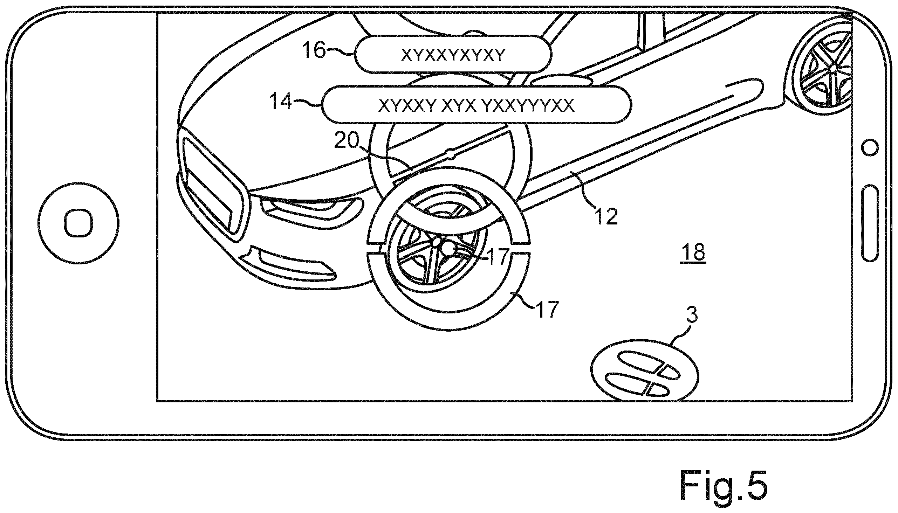

Fig. 5 zeigt als zweite Augmented-Reality-Marker als Hilfselemente den Kreis mit Mittelpunkt 17 und den Kreis 19 zur richtigen Ausrichtung der Kamera auf die Perspektive 2' am Standort 2. Gezeigt wird beispielsweise die Anzeige auf der Kamera ausgehend vom Standort 2 analog zu Fig. 1, wobei das Objektiv der Kamera auf die Perspektive 2' ausgerichtet wird. Die Perspektive 2' kann dabei ein virtueller Punkt im Raum sein, der für den Benutzer unsichtbar ist. Mittels der Kreise 17 und 19 wird dem Benutzer dabei eine Hilfestellung gegeben, wie die Kamera zum Zielen auf die Perspektive 2' auszurichten ist. Dies erfolgt mittels eines Kreises mit einem Mittelpunkt 17 und des zweiten Kreises 19 mit einem Querbalken 20. Dabei werden die Kreise 17 und 19 in einer Flucht angeordnet, wenn das Objektiv der Kamera auf den Zielpunkt der Perspektive 2' zielt, der durch den Mittelpunkt des Kreises 17 verdeckt wird. Der Querbalken 20 zeigt dabei einen für die Perspektive 2' vorgesehene Abstand an. Dies kann beispielsweise durch den Querbalken 20 derart angezeigt werden, indem beispielsweise der Querbalken 20 von außen in den Kreis 19 schwebt und sich bei Erreichen des für die Perspektive 2' vorgesehenen Abstands in der Mitte des Kreises 19 anordnet. Ferner kann mittels des Querbalkens 20 der für die Perspektive 2' vorgesehene Rotationswinkel der Kamera angezeigt werden, indem beispielsweise der Querbalken 20 waagrecht in der Mitte des Kreises 19 angeordnet wird.

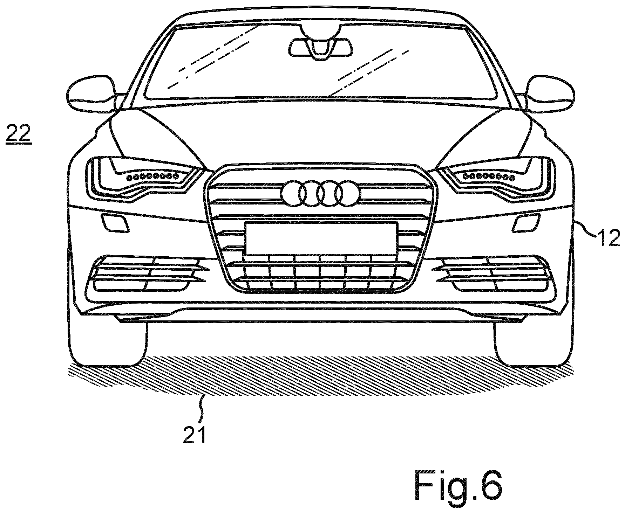

Die Anordnung umfasst auch den entsprechenden Texthinweis 16 und Textanweisung 14. Die Textanweisung 14 kann eine Anweisung wie beispielsweise: "Go to the front driver side position", beinhalten. Im Texthinweis 16 kann eine Information, wie beispielsweise: "Photo 2 of 12", angezeigt werden. Dabei wird dem Benutzer bereits der nächste Standort auf dem Boden 18 angezeigt. Die 2D-Aufnahme der 2D-Aufnahme erfolgt, sobald sich die Kreise 17 und 19 in einer Flucht befinden. Dies kann entweder manuell oder automatisiert erfolgen. Nachher kann beispielsweise vorgesehen sein, dass der Benutzer die 2D-Aufnahme kontrollieren und gegebenenfalls eine zweite 2D-Aufnahme aus der gleichen Perspektive 2' tätigen kann. Sobald die 2D-Aufnahme erfolgreich getätigt wurde, wird dem Benutzer der nächste Standort 3 für die nächste Perspektive 3' in Form eines transparenten Kreises als ersten Augmented-Reality-Marker angezeigt. Das oben beschriebene Vorgehen wird bis zum Erreichen der Perspektive 11' am Standort 11 analog fortgeführt. Die Textanweisungen 14 können dazu dienen, dem Benutzer Standortinformationen oder weitere Tätigungshandlungen, wie beispielsweise das Öffnen einer Kraftfahrzeugtüre oder das Hinsetzen auf den Mittelsitz auf einer Rückbank eines Kraftfahrzeugs, verwendet werden. Der Texthinweis 16 können dazu dienen, Informationen über die aktuelle Anzahl der 2D-Aufnahmen im Vergleich zu einem Sollwert von 2D-Aufnahmen anzuzeigen. Fig. 6 zeigt eine Freistellung des Kraftfahrzeugs 12 vom Hintergrund 22 zur Erstellung von 2D-Aufnahmen unabhängig vom Hintergrund 22. Dabei wird ein entsprechendes 3D-Modell aus einem Speicher, der entweder ein Speicher der Kamera oder ein Speicher einer Servereinheit sein kann, bezogen. Die entsprechenden Perspektivaufnahmen 1' bis 11' werden nun mit den entsprechenden Silhouetten des 3D-Modells des Kraftfahrzeugs 12 überlagert, sodass das Kraftfahrzeug 12 vom Hintergrund 22 freigestellt werden kann. Zusätzlich kann ein Schatten 21 entsprechend einer virtuellen Lichtquelle simuliert werden. Der Hintergrund 22 kann dabei entweder neutral gestaltet sein als weißer Hintergrund oder ein beliebiger weiterer Hintergrund 22 sein.

Dem Nutzer wird durch das Verfahren ein Standardprozess zur fotografischen Abbildung von Kraftfahrzeugen bei einem Händler oder einem Endkunden zur Verfügung gestellt. Dabei können beliebige Fotos in gleichbleibender Qualität vom jeweiligen Kraftfahrzeug aufgenommen werden.

Insgesamt zeigt der heutige Stand, dass für die fotografische Abbildung von Kraftfahrzeugen beim Händler oder beim Endkunden kein Standardprozess verwendet wird. Die Anwender nehmen beliebige Fotos auf und bearbeiten diese unter Umständen nach. Die Grundidee des Verfahrens ist hierbei, mit Markern den Anwender in vorgegebenen Positionen zu führen. Nachteile beim heutigen Stand der Technik sind, dass die Bilder nicht die vom Kunden erwartete Qualität erreichen. Weiterhin ist die Varianz der Bildqualität hoch und eine Nachbearbeitung wird gegebenenfalls durch Dritte ausgeführt. Vorteilhafte Perspektiven können nicht gezielt genutzt werden. Durch das Verfahren innerhalb einer App in Form einer mobilen Anwendung wird sichergestellt, dass Fotos mit definierten Perspektiven auch fahrzeugspezifisch in gleichbleibender Qualität und wiederholbar erstellt werden. Weiterhin ist die Möglichkeit für Überblendungen, zum Beispiel für Kennzeichen, oder Freistellungen, zum Beispiel zum Hintergrund entfernen, gegeben. Vorteilhaft bei dem Verfahren ist, dass die Fotos in gleichbleibender Qualität unabhängig vom Fotograf erfolgen. Dies wird durch das Führen des Anwenders mit Markern an die vorgegebene Position realisiert. Ein Effekt des Verfahrens ist, dass damit die Fotos reproduzierbar werden. Ferner können die Fotos dazu auch zum Objekt individualisierbar gestaltet werden, da die Standorte spezifisch zum Verkaufsobjekt jeweils einprogrammiert werden können.

Im Folgenden ist eine besonders bevorzugte Ausführungsform des Verfahrens beschrieben.

Technisch wird das Verfahren mittels einer Kamera eines mobilen Geräts umgesetzt. Nach Erfassung des Fahrzeugs mittels einer Kamera eines mobilen Geräts wird mittels Augmented-Reality die echte Szene mit 3D-Elementen angereichert. Standpunkte und Hilfselemente für die gewünschte Perspektive sind nun um das Fahrzeug sichtbar. Werden alle Elemente in einer Flucht gebracht, wird automatisch ein Foto aufgenommen. Damit ist eine Kontrolle der aufzunehmenden Bilder möglich. Weiterhin kann dies beliebig oft an verschiedenen Fahrzeugen wiederholt werden. Durch den Einsatz von 3D-Modellen des Fahrzeugs kann im Außenbereich durch Überdeckung eine Maske erzeugt werden und automatisch freigestellte Bilder beziehungsweise Composings, beispielsweise mit Schatten oder anderem Hintergrund oder ähnlichem, erzeugt werden.

Das Verfahren sieht dabei acht Schritte vor. In einem ersten Schritt wird das Kennzeichen des Kraftfahrzeugs zur Positionsbestimmung von vorne oder von hinten erkannt. Anschließend wird ein 3D-Objekt des Kraftfahrzeugs analog zum aufgenommenen Kraftfahrzeug positioniert. Die Überlagerung des aufgenommenen Kraftfahrzeugs mit dem jeweiligen 3D-Modell des Kraftfahrzeugs erfolgt zum Bildnachbearbeiten. In einem dritten Schritt wird basierend auf das Erkennen des Kennzeichens im ersten Schritt ein AR-Marker auf dem Boden zur Anzeige der vorgegebenen Position angezeigt. In einem vierten Schritt werden dem Benutzer zusätzliche Marker zum Ausrichten der Kamera angezeigt. In einem fünften Schritt wird ein automatisches Auslösen der Kamera bei Erreichen der vorgegebenen Perspektive erfolgen. Dies ist beispielsweise dann erreicht, wenn die Hilfselemente als zusätzliche Marker zum Ausrichten der Kamera in einer Flucht angeordnet sind. In einem sechsten Schritt wird der Marker für den nächsten Standort nach dem erfolgreichen Auslösen für die Aufnahme des Fotos dem Benutzer angezeigt. In einem siebten Schritt wird die jeweilige 2D-Aufnahme mit dem 3D-Objekt analog zu der Perspektive der 2D-Aufnahme in der dem 3D-Objekt entsprechenden Silhouette überlagert und das 3D-Objekt von dem Hintergrund der 2D-Aufnahme ausgeschnitten. In einem achten Schritt kann nachträglich ein Schatten mittels des 3D-Objekts und einer virtuellen Lichtquelle eingefügt werden.

Dies hat den Vorteil, dass die Fotos jeweils von dem Benutzer noch konfigurierbar sind. Zusätzlich können spezifische Marker am Objekt, wie beispielsweise Kennzeichen, automatisch überblendet werden. Ferner wird durch das Verfahren auch ermöglicht, Interieurbilder des Kraftfahrzeugs aufzunehmen.

Eine bevorzugte Ausführungsform betrifft ein Verfahren zum Erzeugen von reproduzierbaren Perspektiven 1' bis 11' von Fotografien eines Objekts 12. Dabei wird eine erste 2D-Aufnahme einer vorgegebenen Referenzansicht des Objekts 12 mittels einer Kamera erfasst und von der ersten 2D-Aufnahme aus ein Ausgangsstandort 1 eines Benutzers relativ zum Objekt mittels eines Computer-Vision-Moduls ermittelt. Dabei werden ausgehend vom Ausgangsstandort als Ursprung O des Koordinatensystems der Kamera eine oder mehrere vorgegebene und/oder einstellbare relative Positionen im Umfeld des Objekts 12 und/oder im Objekt 12 als ein oder mehrere Standorte 1 bis11 für die jeweilige Perspektive 1' bis 11' der Kamera für die Aufnahme mindestens einer zweiten 2D-Aufnahme bestimmt. Der jeweilige Standort 1 bis 11 in einer Objektansicht auf einer Anzeige der Kamera wird mittels eines jeweiligen ersten Augmented-Reality-Markers auf dem Fußboden und/oder am Objekt angezeigt. Die Ausrichtung der Kamera bezüglich Winkel und Rotation auf die dem jeweiligen Standort 1 bis 11 entsprechende Perspektive 1' bis 11' erfolgt dabei mittels zweiter Augmented-Reality-Marker als Hilfselemente.

Insgesamt zeigt das Beispiel, wie durch die Erfindung Anwender mit Markern an vorgegebene Positionen geführt werden können, um fotografische Abbildungen von Objekten in gleichbleibender Qualität zu tätigen.

## Patentansprüche

1. Verfahren zum Erzeugen von reproduzierbaren Perspektiven (1'-11') von Fotografien eines Objekts (12), wobei,
eine erste 2D-Aufnahme einer vorgegebenen Referenzansicht des Objekts (12) mittels einer Kamera erfasst wird und von der ersten 2D-Aufnahme aus ein Ausgangsstandort (O) mittels eines Computer-Vision-Moduls ermittelt wird, wobei
ausgehend vom Ausgangsstandort (O) eine oder mehrere vorgegebene und/oder einstellbare relative Positionen im Umfeld und am und/oder im Objekt (12) als ein oder mehrere Standorte (1-11) für die jeweilige Perspektive (1'-11') der Kamera für die 2D-Aufnahme mindestens einer zweiten 2D-Aufnahme bestimmt werden und der jeweilige Standort (1-11) in einer Objektansicht auf einer Anzeige der Kamera mittels eines jeweiligen ersten Augmented-Reality-Markers auf dem Fußboden und/oder am Objekt angezeigt werden,
**dadurch gekennzeichnet, dass**,
an dem einen Standort oder den mehreren Standorten (1-11) dem Benutzer ein oder mehrere Hilfselemente (17; 19) mittels zweiter Augmented-Reality-Marker in der Objektansicht auf der Anzeige der Kamera zum Ausrichten der Kamera auf die mindestens eine vorgegebene und/oder einstellbare Perspektive (1'-11') angezeigt werden, wobei die ein oder mehreren Hilfselemente (17; 19) bei Erreichen der mindestens einen vorgegebenen und/oder einstellbaren Perspektive (1'-11') in einer Flucht angeordnet werden, und/oder von dem Objekt (12) mittels eines 3D-Modells des Objekts (12) im Außenbereich des Objekts (12) durch Überdeckung mittels einer Maske freigestellte Bilder und/oder Composings erzeugt werden, wobei ein Schatten mittels des 3D-Modells berechnet und in die zumindest eine 2D-Aufnahme eingefügt wird.

2. Verfahren nach Anspruch 1, wobei die Kamera mittels des Computer-Vision-Moduls ein Referenzobjekt am Objekt (12) in der Referenzansicht erkennt und mittels einer Kontur des Referenzobjekts den Ausgangsstandort (O) relativ zum Objekt ermittelt.

3. Verfahren nach Anspruch 2, wobei die Kamera mittels zumindest einen Beschleunigungs- und/oder Gyrosensors ihre aktuelle relative Position und Orientierung relativ zum Ausgangsstandort (O) ermittelt.

4. Verfahren nach einem der vorhergehenden Ansprüche, wobei das Objekt (12) ein Kraftfahrzeug ist.

5. Verfahren nach Anspruch 4, wobei der Marker ein Kennzeichen (13) des Kraftfahrzeugs ist.

6. Verfahren nach einem der vorhergehenden Ansprüche, wobei zur Bestimmung der ein oder mehreren Standorte (1-11) für die jeweilige Perspektive (1'-11') der Kamera die Maße des Objekts (12) berücksichtigt werden, sodass das Verfahren auf eine Vielzahl von verschiedenen Objekten (12) anwendbar ist.

7. Verfahren nach einem der vorhergehenden Ansprüche, wobei bei Erreichen der Kamera an der jeweils mindestens einen vorgegebenen und/oder einstellbaren Perspektive (1'-11') jeweils eine zweite 2D-Aufnahme von der Kamera automatisch erfasst wird.

8. Verfahren nach einem der vorhergehenden Ansprüche, wobei eine Anzahl an vorgegebenen Perspektiven sowohl Perspektiven (1 '-9') im Umfeld des Objekts (12) als auch Perspektiven (10'-11') im Innenraum des Objekts (12) umfasst.

9. Verfahren nach einem der vorhergehenden Ansprüche, wobei eine Benutzerauswahl das 3D-Modell betreffend empfangen wird und das 3D-Modell aus einem Speicher und/oder einer Servereinheit gemäß der Benutzerauswahl abgerufen wird.

10. Verfahren nach einem der vorhergehenden Ansprüche, wobei die zweite 2D-Aufnahme des Objekts mittels Überblendungen oder Freistellungen modifiziert wird.

11. Kamera mit einer Anzeige und mit einer Prozessorvorrichtung, **dadurch gekennzeichnet, dass** die Kamera dazu eingerichtet ist, das Verfahren nach einem der vorhergehenden Ansprüche auszuführen.

## Claims

1. Method for generating reproducible perspectives (1'-11') of photographs of an object (12), wherein
a first 2D image of a predetermined reference view of the object (12) is captured by means of a camera and an initial location (0) is determined from the first 2D image by means of a computer vision module, wherein
starting from the initial location (0) one or more predetermined and/or adjustable relative positions in the environment and on and/or in the object (12) are determined as one or more locations (1-11) for the respective perspective (1'-11') of the camera for the 2D capture of at least one second 2D image, and the respective location (1- 11) is displayed in an object view on a display of the camera by means of a respective first augmented reality marker on the floor and/or on the object,
**characterised in that**
at the one location or the plurality of locations (1-11), one or more auxiliary elements (17; 19) are displayed to the user by means of second augmented reality markers in the object view on the display of the camera for aligning the camera with the at least one predetermined and/or adjustable perspective (1'-11'), wherein the one or more auxiliary elements (17; 19) are arranged in alignment when the at least one predetermined and/or adjustable perspective (1'-11') is reached, and/or
images and/or composings are generated from the object (12) by means of a 3D model of the object (12) in the outer region of the object (12) by overlapping by means of a mask, wherein a shadow is calculated by means of the 3D model and is inserted into the at least one 2D image.

2. Method according to claim 1, wherein the camera detects a reference object on the object (12) in the reference view by means of the computer vision module and determines the initial location (0) relative to the object by means of a contour of the reference object.

3. Method according to claim 2, wherein the camera determines its current relative position and orientation relative to the initial location (0) by means of at least one acceleration and/or gyro sensor.

4. Method according to any of the preceding claims, wherein the object (12) is a motor vehicle.

5. Method according to claim 4, wherein the marker is an identifier (13) of the motor vehicle.

6. Method according to any of the preceding claims, wherein for determining the one or more locations (1-11) for the respective perspective (1'-11') of the camera, the dimensions of the object (12) are taken into account so that the method can be applied to a plurality of different objects (12).

7. Method according to any of the preceding claims, wherein
when the camera reaches the respective at least one predetermined and/or adjustable perspective (1'-11') a second 2D image is automatically captured by the camera.

8. Method according to any of the preceding claims, wherein a number of predetermined perspectives comprises perspectives (1'-9') in the environment of the object (12) as well as perspectives (10'-11') in the interior of the object (12).

9. Method according to any one of the preceding claims, wherein a user selection concerning the 3D model is received and the 3D model is retrieved from a memory and/or a server unit according to the user selection.

10. Method according to any of the preceding claims, wherein the second 2D-image of the object is modified by means of blending or cropping.

11. Camera with a display and with a processor device, **characterised in that** the camera is configured to perform the method according to any of the preceding claims.

## Revendications

1. Procédé pour générer des perspectives reproductibles (1'-11') de photographies d'un objet (12), dans lequel,
une première prise de vue 2D d'une vue de référence prédéterminée de l'objet (12) est saisie au moyen d'une caméra et un emplacement de départ (0) est déterminé à partir de la première prise de vue 2D au moyen d'un module de vision par ordinateur, dans lequel
émanant de l'emplacement de départ (0), une ou plusieurs positions relatives prédéterminées et/ou réglables dans l'environnement et sur et/ou dans l'objet (12) sont déterminées comme un ou plusieurs emplacements (1-11) pour la perspective respective (1'-11') de la caméra pour la prise de vue 2D d'au moins une seconde prise de vue 2D et l'emplacement respectif (1-11) est affiché dans une vue d'objet sur un affichage de la caméra au moyen d'un premier marqueur de réalité augmentée respectif sur le sol et/ou sur l'objet,
**caractérisé en ce**
**qu'**à l'un ou aux plusieurs emplacements (1-11), un ou plusieurs éléments auxiliaires (17 ; 19) sont affichés à l'utilisateur au moyen de seconds marqueurs de réalité augmentée dans la vue d'objet sur l'affichage de la caméra pour orienter la caméra vers l'au moins une perspective (1'-11') prédéterminée et/ou réglable, dans lequel l'un ou les plusieurs éléments auxiliaires (17 ; 19) sont disposés en alignement lorsque l'au moins une perspective (1'-11') prédéterminée et/ou réglable est atteinte, et/ou
des images et/ou des compositions détourées de l'objet (12) sont générées au moyen d'un modèle 3D de l'objet (12) dans la zone extérieure de l'objet (12) par recouvrement au moyen d'un masque, dans lequel une ombre est calculée au moyen du modèle 3D et insérée dans l'au moins une prise de vue 2D.

2. Procédé selon la revendication 1, dans lequel la caméra reconnaît un objet de référence sur l'objet (12) dans la vue de référence au moyen du module de vision par ordinateur et détermine la position de départ (0) par rapport à l'objet au moyen d'un contour de l'objet de référence.

3. Procédé selon la revendication 2, dans lequel la caméra détermine sa position et son orientation relatives actuelles par rapport à l'emplacement de départ (0) au moyen d'au moins un capteur d'accélération et/ou gyroscopique.

4. Procédé selon l'une quelconque des revendications précédentes, dans lequel l'objet (12) est un véhicule automobile.

5. Procédé selon la revendication 4, dans lequel le marqueur est un signe (13) du véhicule automobile.

6. Procédé selon l'une quelconque des revendications précédentes, dans lequel, pour déterminer l'un ou les plusieurs emplacements (1-11) pour la perspective respective (1'-11') de la caméra, les dimensions de l'objet (12) sont prises en compte, de sorte que le procédé est applicable à une pluralité d'objets (12) différents.

7. Procédé selon l'une des revendications précédentes, dans lequel, lorsque la caméra atteint l'au moins une perspective prédéterminée et/ou réglable (1'-11'), une seconde prise de vue 2D est automatiquement saisie par la caméra.

8. Procédé selon l'une quelconque des revendications précédentes, dans lequel un nombre de perspectives prédéterminées comprend aussi bien des perspectives (1'-9') dans l'environnement de l'objet (12) que des perspectives (10'-11') dans l'espace intérieur de l'objet (12).

9. Procédé selon l'une quelconque des revendications précédentes, dans lequel une sélection d'utilisateur concernant le modèle 3D est reçue et le modèle 3D est récupéré à partir d'une mémoire et/ou d'une unité de serveur conformément à la sélection d'utilisateur.

10. Procédé selon l'une quelconque des revendications précédentes, dans lequel la seconde prise de vue 2D de l'objet est modifiée au moyen de fondus enchaînés ou de détourages.

11. Caméra avec un affichage et avec un dispositif de processeur, **caractérisée en ce que** la caméra est configurée pour mettre en œuvre le procédé selon l'une quelconque des revendications précédentes.
